(19) Europäisches Patentamt
European Patent Office
Office européen des brevets

(11) **EP 3 553 189 B1**

(12) **EUROPEAN PATENT SPECIFICATION**

(45) Date of publication and mention
of the grant of the patent:
**17.08.2022 Bulletin 2022/33**

(21) Application number: **17881506.4**

(22) Date of filing: **11.12.2017**

(51) International Patent Classification (IPC):
*C21B 7/24* (2006.01)   *C21B 7/12* (2006.01)
*F27B 1/28* (2006.01)   *F27B 1/21* (2006.01)
*F27D 21/00* (2006.01)   *F27D 21/02* (2006.01)
*G01J 5/00* (2022.01)   *G01J 5/52* (2022.01)
*F27D 19/00* (2006.01)

(52) Cooperative Patent Classification (CPC):
**C21B 7/12; C21B 7/24; F27B 1/21; F27B 1/28;
F27D 19/00; F27D 21/00; F27D 21/02; G01J 5/00;**
G01J 5/52

(86) International application number:
**PCT/KR2017/014476**

(87) International publication number:
**WO 2018/110921 (21.06.2018 Gazette 2018/25)**

(54) **BLAST FURNACE TAP HOLE TEMPERATURE MEASUREMENT DEVICE**

HOCHOFENABSTICHÖFFNUNGSTEMPERATURMESSVORRICHTUNG

DISPOSITIF DE MESURE DE TEMPÉRATURE DE TROU DE COULÉE DE HAUT FOURNEAU

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **12.12.2016 KR 20160168767**

(43) Date of publication of application:
**16.10.2019 Bulletin 2019/42**

(73) Proprietor: **Posco**
**Pohang-si, Gyeongsangbuk-do 37859 (KR)**

(72) Inventors:
• **HWANG, Won-Ho**
**Pohang-si**
**Gyeongsangbuk-do 37877 (KR)**
• **CHOI, Sang-Woo**
**Pohang-si**
**Gyeongsangbuk-do 37877 (KR)**

• **BAE, Ho-Moon**
**Pohang-si**
**Gyeongsangbuk-do 37877 (KR)**

(74) Representative: **Zech, Stefan Markus**
**Meissner Bolte Patentanwälte**
**Rechtsanwälte Partnerschaft mbB**
**Postfach 86 06 24**
**81633 München (DE)**

(56) References cited:
**WO-A1-2015/037352    JP-A- H01 233 329
JP-A- 2006 119 110    JP-A- 2007 246 959
JP-A- 2015 113 476    KR-A- 19940 014 819
KR-A- 20110 065 528    US-A- 6 129 888
US-B1- 6 562 285**

**Description**

[Technical Field]

The present invention relates to a blast furnace tap hole temperature measurement device.

[Background Art]

Quickly reflecting the precise temperature of a blast furnace tap hole in the operating conditions of an iron making process is important for stabilization of a blast furnace, production efficiency, and energy consumption efficiency.
JP 2007 246959 A relates to using a computer program to measure a mixing ratio of molten iron and molten slag flowing out from an outlet formed in a blast furnace. Further relevant methods to the present invention are defined in DE 11 2014 003549 T5.
According to the related art, a temperature of a blast furnace tap hole is high enough to change a state of some substances, so it is difficult to accurately measure the temperature thereof.

[Disclosure]

[Technical Problem]

An aspect of the present disclosure may provide a blast furnace tap hole temperature measurement device capable of accurately measuring a temperature of a tap hole.

[Technical Solution]

According to an aspect of the present disclosure, a blast furnace tap hole temperature measurement device includes: a temperature measurement unit for measuring a temperature value by measuring first and second wavelength radiation energy of a blast furnace tap hole, and applying the first and second wavelength radiation energy to a reference emissivity ratio; a camera for obtaining an image of the blast furnace tap hole; an image processing unit for calculating a ratio of slag and molten iron by identifying the slag and the molten iron from the image; and a correction unit for generating a final temperature value by applying a corrected temperature value corresponding to a difference between a ratio calculated by the image processing unit and a reference ratio corresponding to the reference emissivity ratio to a temperature value, measured by the temperature measurement unit, wherein, when an amount of the slag is greater as compared with the molten iron in the blast furnace tap hole, the correction unit generates the corrected temperature value so that the final temperature value is higher, as set forth in claim 1 and the appended claims.

[Advantageous Effects]

According to an exemplary embodiment in the present disclosure, a temperature of a blast furnace tap hole may be accurately measured and quickly reflected in the operating conditions of the iron making process, and stabilization of blast furnace, production efficiency, and energy consumption efficiency may be improved.

[Description of Drawings]

FIG. 1 is a view illustrating a blast furnace tap hole temperature measurement device according to an embodiment.
FIG. 2 is a view illustrating distribution of radiation energy which can be measured by a temperature measurement unit.
FIG. 3 is a view illustrating emissivity characteristics for each wavelength of slag and molten iron.
FIG. 4 is a view illustrating an emissivity ratio according to a ratio of slag and molten iron.
FIG. 5 is a view illustrating a temperature value error according to a ratio of slag and molten iron.
FIG. 6 is a view illustrating a ratio measurement unit.
FIG. 7 is a view illustrating brightness analysis in the captured image of the camera.
FIG. 8 is a view illustrating position analysis in the captured image of the camera.
FIG. 9 is a view illustrating an analysis region in the captured image of the camera.
FIG. 10 is a view illustrating maximum brightness, minimum brightness, and average brightness in the captured image of the camera.

[Best Mode for Invention]

Embodiments of the present disclosure will hereinafter be described with reference to the attached drawings. The disclosure may, however, be exemplified in many different forms and should not be construed as being limited to the specific embodiments set forth herein. The shapes and sizes of components shown in the drawings are exaggerated for clarity. Elements having substantially the same or equivalent constitutions and functions are referred to by the same reference numerals throughout the specification.

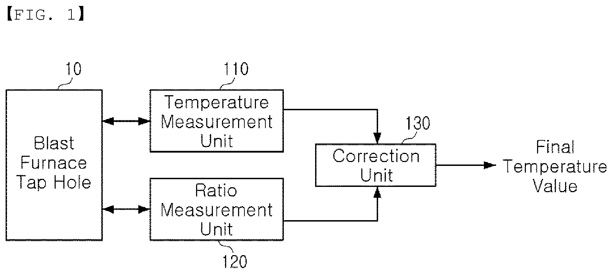

FIG. 1 is a view illustrating a blast furnace tap hole temperature measurement device according to an embodiment.

Referring to FIG. 1, a blast furnace tap hole temperature measurement device according to an embodiment may include a temperature measurement unit 110, a ratio measurement unit 120, and a correction unit 130.

The temperature measurement unit 110 may measure a temperature value of the blast furnace tap hole 10. For example, the temperature measurement unit 110 may be a two-wavelength thermometer which measures radiation energy having different wavelengths to generate a temperature value.

The ratio measurement unit 120 may measure a ratio of slag and molten iron of the blast furnace tap hole 10. For example, the ratio measurement unit 120 may obtain an image of the blast furnace tap hole 10 and analyze the image to measure a ratio of slag and molten iron.

The correction unit 130 may generate a final temperature value by applying a corrected temperature value, corresponding to the ratio, measured by the ratio measurement unit 120, to a temperature value, measured by the temperature measurement unit 110.

There is a characteristic that the temperature value, measured by the temperature measurement unit 110, differs from an actual temperature depending on the ratio of slag and molten iron. In this regard, the correction unit 130 corrects the characteristic described above, thereby generating a final temperature value, closer to the actual temperature, as compared with the temperature value, measured by the temperature measurement unit 110. Accordingly, a temperature of the blast furnace tap hole 10 may be accurately measured.

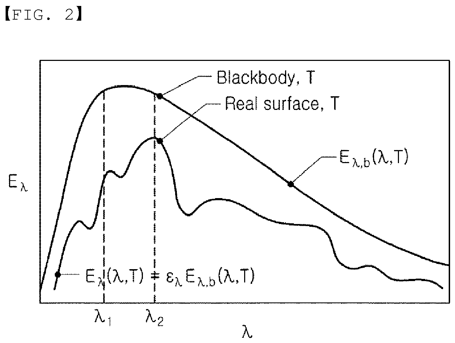

FIG. 2 is a view illustrating distribution of radiation energy which could be measured by a temperature measurement unit, and illustrates radiation energy $E_\lambda, b(\lambda, T)$ according to a wavelength $\lambda$ of a blackbody of a specific temperature T, and radiation energy $E_\lambda(\lambda, T)$ according to a wavelength $\lambda$ of a real surface of a specific temperature T.

Here, the radiation energy $E_\lambda(\lambda, T)$ of a real surface may be defined as the product of the radiation energy $E_\lambda, b(\lambda, T)$ of the blackbody and the emissivity $\varepsilon\lambda$.

The two-wavelength thermometer, in which emissivity is set, may measure radiation energy $E_{\lambda 1}$ of a first wavelength $\lambda 1$ and radiation energy $E_{\lambda 2}$ of a second wavelength $\lambda 2$ at a specific temperature, and may generate a temperature value corresponding to a difference value between two types of radiation energy. Here, the relationship between the difference value and the temperature value may be set in accordance with the Stefan-Boltzmann law.

Here, the relationship could be generalized by Equation 1. Here, a value, obtained by dividing emissivity $\varepsilon 1$ of the first wavelength $\lambda 1$ by emissivity $\varepsilon 2$ of the second wavelength $\lambda 2$, may be defined as an emissivity ratio.

【Equation 1】

$$R_\lambda(T) = f\left(\frac{E_{\lambda_1}}{E_{\lambda_2}}\right), \quad \frac{E_{\lambda_1}}{E_{\lambda_2}} = \frac{\varepsilon_1 E_{b\lambda 1}}{\varepsilon_2 E_{b\lambda 2}}$$

The temperature measurement unit may measure first and second wavelength radiation energy $E_{\lambda 1}$ and $E_{\lambda 2}$ of a blast furnace tap hole, and may apply a reference emissivity ratio to the first and second wavelength radiation energy $E_{\lambda 1}$ and $E_{\lambda 2}$ to generate a temperature value. For example, the temperature measurement unit may set an emissivity ratio when a ratio of slag and molten iron of the blast furnace tap hole is the reference ratio, as the reference emissivity ratio.

On the other hand, in the blast furnace tap hole, a slag at the start of tapping may be greater than a ratio of slag at the end of tapping. Thus, the reference ratio may be set as a ratio of average slag in the middle of tapping of the blast furnace tap hole.

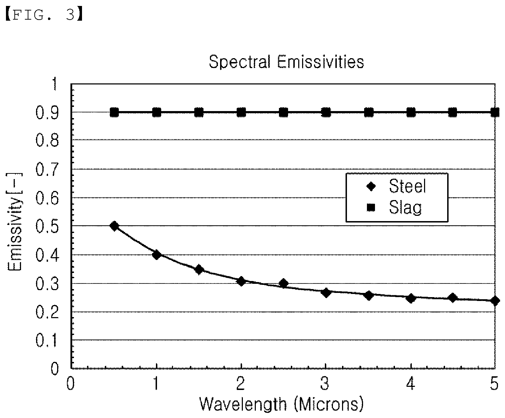

FIG. 3 is a view illustrating emissivity characteristics for each wavelength of slag (Slag) and molten iron (Steel), and illustrates emissivity according to a wavelength of each of slag and molten iron.

Here, the emissivity of the slag may be hardly affected by a wavelength, while the emissivity of the molten iron may be significantly affected by a wavelength. In other words, an emissivity ratio of the slag may be close to 1, but an emissivity ratio of the molten iron may be not close to 1.

Thus, the Equation 1 could be expressed by Equation 2 according to reflection of the emissivity of slag and the emissivity of molten iron. Here, m is the emissivity of molten iron, $\varepsilon s$ is the emissivity of slag, Am is an area ratio of molten iron, As is an area ratio of slag, and the sum of the area ratio of molten iron and the area ratio of slag is 1.

【Equation 2】

$$R_\lambda(T) = f\left(\frac{E_{\lambda_1}}{E_{\lambda_2}}\right), \frac{E_{\lambda_1}}{E_{\lambda_2}} = \frac{\varepsilon_1 E_{b\lambda_1}(T)}{\varepsilon_2 E_{b\lambda 2}(T)} = \frac{(\varepsilon_{m\lambda_1} A_m + \varepsilon_{s\lambda_1} A_s) E_{b\lambda 1}(T)}{(\varepsilon_{m\lambda_2} A_m + \varepsilon_{s\lambda 2} A_s) E_{b\lambda 2}(T)}$$

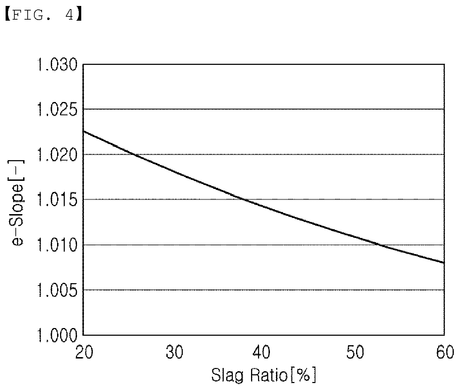

FIG. 4 is a view illustrating an emissivity ratio according to a ratio of slag and molten iron, and illustrates a total emissivity ratio (e-Slope) according to the ratio of slag (Slag Ratio).

As the ratio of slag is higher, the total emissivity ratio may become 1, which is close to the emissivity ratio of slag.

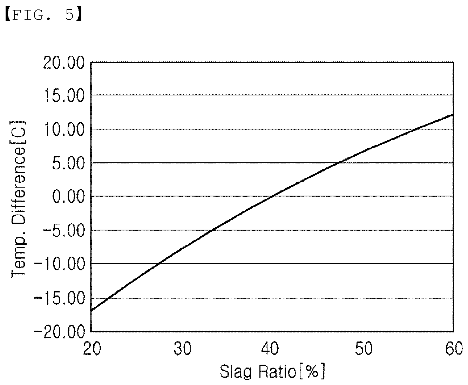

FIG. 5 is a view illustrating a temperature value error according to a ratio of slag and molten iron, and illustrates a temperature value error (Temp. Difference) according to a ratio of slag (Slag Ratio).

Here, a reference emissivity ratio, set in the temperature measurement unit, may be assumed to be an emissivity ratio when a ratio of slag is 40%.

For example, each ratio of slag may correspond to a temperature value error. The correction unit may generate a corrected temperature value, a negative number of a temperature value error corresponding to a ratio measured by the ratio measurement unit.

For example, the correction unit may generate a corrected temperature value to be greater as a ratio of slag, measured by the ratio measurement unit, is greater as compared with a reference ratio, and may generate a corrected temperature value to be smaller as the ratio of slag, measured by the ratio measurement unit, is smaller as compared with the reference ratio.

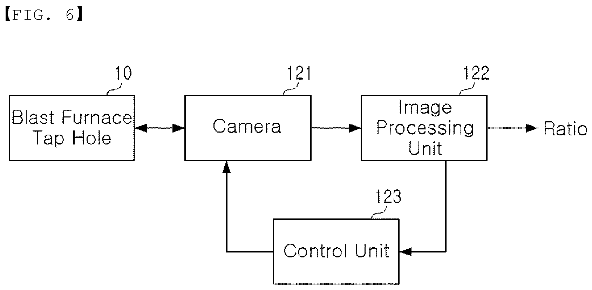

FIG. 6 is a view illustrating a ratio measurement unit.

Referring to FIG. 6, a ratio measurement unit may include a camera 121, an image processing unit 122, and a control unit 123.

The camera 121 may obtain an image of the blast furnace tap hole 10. For example, the camera 121 may be a high-speed camera capable of capturing images 200 times per second, and may have a zoom function.

The image processing unit 122 may calculate a ratio by identifying slag and molten iron from the image. For example, the image processing unit 122 may be implemented as a computing environment, including a processor, a memory, an input device, an output device, and communication connection.

The control unit 123 may control a capturing range of the camera 121 based on an image analysis result of the image processing unit 122. For example, the control unit 123 may adjust a size of a capturing range by controlling a lens of the camera 121, and may adjust a position of the capturing range by driving the camera 121.

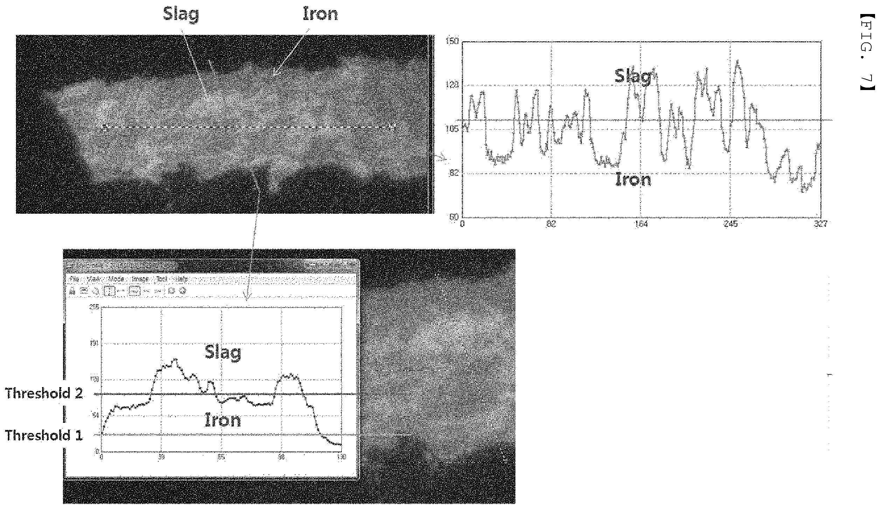

FIG. 7 is a view illustrating brightness analysis in the captured image of the camera, and illustrates an example of an image, an example of a graph illustrating brightness according to a position of the image, an example of first reference brightness (Threshold 1), an example of second reference brightness (Threshold 2), and an example of brightness corresponding to a boundary point between slag and molten iron.

For example, the image processing unit, included in ratio measurement unit, may calculate a ratio of a pixel, having brightness higher than first and second reference brightness in an image, and a pixel having brightness higher than the first reference brightness and lower than the second reference brightness in the image.

For example, the image processing unit, included in ratio measurement unit, may identify a set of pixels, having brightness lower than the first reference brightness (Threshold 1) in an image, as background, may identify a set of pixels having brightness, higher than the first reference brightness (Threshold 1) and lower than the second reference brightness (Threshold 2) in the image, as molten iron, and may identify a set of pixels, having brightness, higher than the first and second reference brightness (Threshold 1 and Threshold 2) in the image, as slag.

Here, the pixels, described above and below, may include not only a single pixel but also a set of pixels including a plurality of pixels, adjacent to each other.

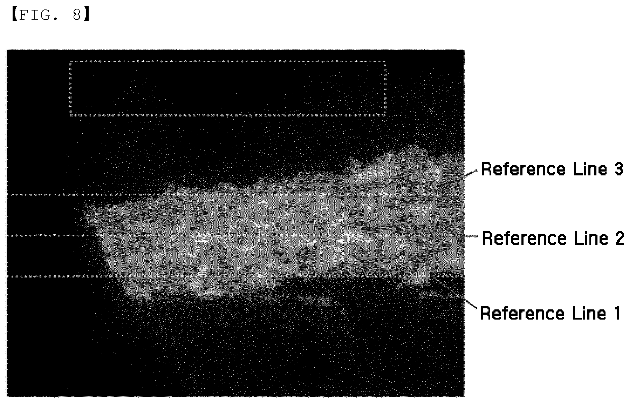

FIG. 8 is a view illustrating position analysis in the captured image of the camera, and illustrates an example of the image, and an example of a reference line 1 to a reference line 3 set in the image.

For example, a control unit, included in a ratio measurement unit, may adjust a capturing range of a camera according to an overall position in a dark region corresponding to background in the image . The image may be divided into a region below a reference line 1, a region between the reference line 1 and a reference line 2, a region between the reference line 2 and a reference line 3, and a region above the reference line 3. The control unit may allow the capturing range of the camera to move more, as a difference between a ratio of a dark region in the region below the reference line 1 and a ratio of a dark region in the region above the reference line 3.

On the other hand, the reference line 1 to the reference line 3 may be set based on the analysis result of the image processing unit. For example, the reference line 1 to the reference line 3 may be set based on an overall position of a boundary between slag or molten iron and background in an image. Then, the reference line 2 may be set in a center line of the reference line 1 to the reference line 3. The reference line 2 may be used to set the analysis region described below.

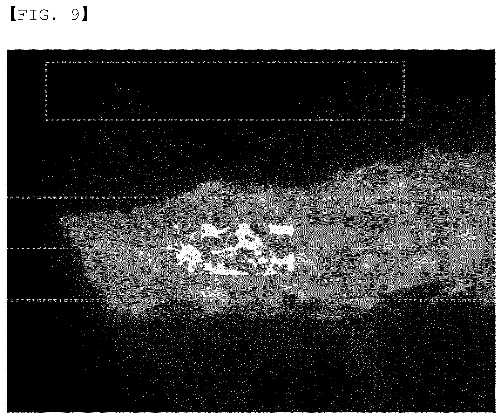

FIG. 9 is a view illustrating an analysis region in the captured image of the camera, and illustrates an example of an image, and an example of the analysis region set in the image.

For example, the image processing unit, included in ratio measurement unit, may set a reference line 1 and a reference line 3, corresponding to positions of boundaries of a dark region corresponding to the background, respectively, may set a reference line 2 between the reference line 1 and the reference line 3, may set an analysis region including a portion of the reference line 2, and may calculate a ratio of a pixel having brightness higher than second reference brightness in the analysis region, and a pixel having brightness lower than the second reference brightness in the analysis region.

Accordingly, the time required for image processing of the image processing unit may be reduced, and image intensive analysis to improve the analysis accuracy of the image processing part may be easily implemented.

On the other hand, the analysis region may be arbitrarily selected from regions, in which a pixel having brightness lower than first reference brightness is substantially not included, without setting the reference line 1 to the reference line 3.

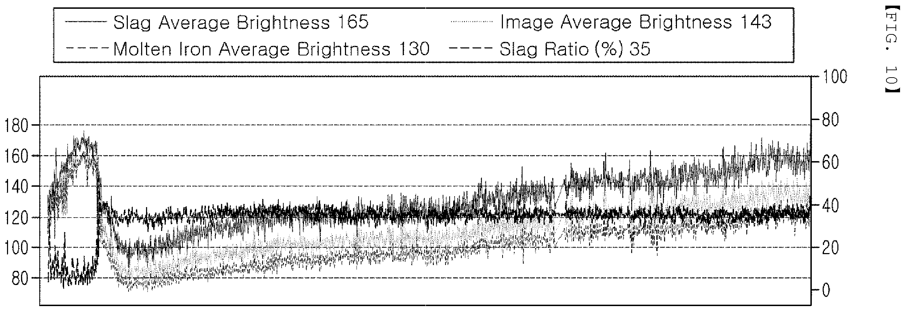

FIG. 10 is a view illustrating maximum brightness, minimum brightness, and average brightness in the captured image of the camera, and illustrates brightness of molten iron, brightness of an image, and brightness of slag according to a position of the image.

For example, the image processing unit, included in ratio measurement unit, may set first and second reference brightness dependent on at least one among maximum brightness, minimum brightness, and average brightness of the image.

The overall brightness of the image, obtained by the camera, may vary depending on the environment of the blast furnace tap hole. The overall brightness may be reflected in the maximum brightness, minimum brightness, and average brightness.

Accordingly, the blast furnace tap hole temperature measurement device according to an embodiment may measure a temperature of the blast furnace tap hole accurately, despite a flexible environment of the blast furnace tap hole.

While exemplary embodiments have been shown and described above, it will be apparent to those skilled in the art that modifications and variations could be made without departing from the scope of the present invention as defined by the appended claims.

## Claims

**1.** A blast furnace tap hole temperature measurement device, comprising:

a temperature measurement unit (110) configured to measure a temperature value by measuring first and second wavelength radiation energy of a blast furnace tap hole (10), and applying a reference emissivity ratio to the first and second wavelength radiation energy;
a camera (121) configured to obtain an image of the blast furnace tap hole (10);
an image processing unit (122) configured to calculate a ratio of slag and molten iron by identifying the slag and the molten iron from the image; and
a correction unit (130) configured to generate a final temperature value by applying a corrected temperature value, corresponding to a difference between a ratio, calculated by the image processing unit (122), and a reference ratio, corresponding to the reference emissivity ratio, to a temperature value, measured by the temperature measurement unit (110),
wherein, when an amount of the slag is greater as compared with the molten iron in the blast furnace tap hole (10), the correction unit (130) generates the corrected temperature value so that the final temperature value is higher.

**2.** The blast furnace tap hole temperature measurement device of claim 1,
wherein the image processing unit (122) calculates a ratio of a pixel having brightness, higher than first and second reference brightness in the image, and a pixel having brightness, higher than the first reference brightness and lower than the second reference brightness in the image.

**3.** The blast furnace tap hole temperature measurement device of claim 1,
wherein the image processing unit (122) identifies a set of pixels, having brightness lower than first reference brightness in the image, as a background, identifies a set of pixels, having brightness higher than the first reference brightness and lower than second reference brightness in the image, as the molten iron, and identifies a set of pixels, having brightness higher than the first and second reference brightness in the image, as the slag.

**4.** The blast furnace tap hole temperature measurement device of claim 1, wherein the image processing unit (122) identifies a set of pixels, having brightness lower than first reference brightness in the image, as background, sets a reference line 1 and a reference line 3, corresponding to positions of boundaries of the background, respectively, in the image, sets a reference line 2, between the reference line 1 and the reference line 3 in the image, sets an analysis region including a portion of the reference line 2 in the image, and calculates a ratio of a pixel having brightness higher than the second reference brightness in the analysis region and a pixel having brightness lower than the second reference brightness in the analysis region.

**5.** The blast furnace tap hole temperature measurement device of claim 4, further comprising a control unit (123) configured to control a capturing range of the camera (121) based on a position of the background in the image or a ratio of the background in the image.

**6.** The blast furnace tap hole temperature measurement device of claim 3, wherein the image processing unit (122) sets the first and second reference brightness dependent on at least one among maximum brightness, minimum brightness, and average brightness of the image.

**7.** The blast furnace tap hole temperature measurement device of claim 5, wherein the image processing unit (122) sets the first and second reference brightness dependent on at least one among maximum brightness, minimum brightness, and average brightness of the image.

**Patentansprüche**

**1.** Hochofenabstichöffnungstemperaturmessvorrichtung, umfassend:

eine Temperaturmesseinheit (110), die dazu konfiguriert ist, durch Messen einer Strahlungsenergie mit einer ersten Wellenlänge und einer zweiten Wellenlänge einer Hochofenabstichöffnung (10) und Anwenden eines Referenzemissionsgradverhältnisses auf die Strahlungsenergie mit einer ersten Wellenlänge und einer zweiten Wellenlänge einen Temperaturwert zu messen; eine Kamera (121), die dazu konfiguriert ist, ein Bild der Hochofenabstichöffnung (10) aufzunehmen; eine Bildverarbeitungseinheit (122), die dazu konfiguriert ist, durch Identifizieren von Schlacke und flüssigem Eisen anhand des Bildes ein Verhältnis der Schlacke und des flüssigen Eisens zu berechnen; und eine Korrektureinheit (130), die dazu konfiguriert ist, durch Anwenden eines korrigierten Temperaturwerts, der einer Differenz zwischen einem Verhältnis, das durch die Bildverarbeitungseinheit (122) berechnet wird, und einem Referenzverhältnis, das dem Referenzemissionsgradverhältnis entspricht, auf einen Temperaturwert, der durch die Temperaturmesseinheit (110) gemessen wird, einen Endtemperaturwert zu erzeugen, wobei die Korrektureinheit (130), wenn eine Menge der Schlacke im Vergleich zu dem flüssigen Eisen in der Hochofenabstichöffnung (10) größer ist, den korrigierten Temperaturwert erzeugt, sodass der Endtemperaturwert höher ist.

**2.** Hochofenabstichöffnungstemperaturmessvorrichtung nach Anspruch 1, wobei die Bildverarbeitungseinheit (122) ein Verhältnis eines Pixels, das eine Helligkeit aufweist, die höher als die erste und zweite Referenzhelligkeit in dem Bild ist, und eines Pixels, das eine Helligkeit aufweist, die höher als die erste Referenzhelligkeit und niedriger als die zweite Referenzhelligkeit in dem Bild ist, berechnet.

**3.** Hochofenabstichöffnungstemperaturmessvorrichtung nach Anspruch 1, wobei die Bildverarbeitungseinheit (122) eine Menge von Pixeln, die eine Helligkeit aufweisen, die niedriger als die erste Referenzhelligkeit in dem Bild ist, als einen Hintergrund identifiziert, eine Menge von Pixeln, die eine Helligkeit aufweisen, die höher als die erste Referenzhelligkeit und niedriger als die zweite Referenzhelligkeit in dem Bild ist, als das flüssige Eisen identifiziert und eine Menge von Pixeln, die eine Helligkeit aufweisen, die höher als die erste und zweite Referenzhelligkeit in dem Bild ist, als die Schlacke identifiziert.

**4.** Hochofenabstichöffnungstemperaturmessvorrichtung nach Anspruch 1, wobei die Bildverarbeitungseinheit (122) eine Menge von Pixeln, die eine Helligkeit aufweisen, die niedriger als die erste Referenzhelligkeit in dem Bild ist, als Hintergrund identifiziert, eine Referenzlinie 1 und eine Referenzlinie 3 einstellt, die jeweils Positionen von Grenzen des Hintergrunds in dem Bild entsprechen, eine Referenzlinie 2 zwischen der Referenzlinie 1 und der Referenzlinie 3 in dem Bild einstellt, einen Analysebereich, der einen Abschnitt der Referenzlinie 2 beinhaltet, in dem Bild einstellt, und ein Verhältnis eines Pixels, das eine Helligkeit aufweist, die höher als die zweite Referenzhelligkeit in dem Analysebereich ist, und eines Pixels, das eine Helligkeit aufweist, die niedriger als die zweite Referenzhelligkeit in dem Analysebereich ist, berechnet.

5. Hochofenabstichöffnungstemperaturmessvorrichtung nach Anspruch 4, ferner umfassend eine Steuereinheit (123), die dazu konfiguriert ist, einen Aufnahmebereich der Kamera (121) auf Grundlage einer Position des Hintergrunds in dem Bild oder eines Verhältnisses des Hintergrunds in dem Bild zu steuern.

6. Hochofenabstichöffnungstemperaturmessvorrichtung nach Anspruch 3, wobei die Bildverarbeitungseinheit (122) die erste und zweite Referenzhelligkeit abhängig von mindestens einer von der maximalen Helligkeit, der minimalen Helligkeit und der durchschnittlichen Helligkeit des Bildes einstellt.

7. Hochofenabstichöffnungstemperaturmessvorrichtung nach Anspruch 5, wobei die Bildverarbeitungseinheit (122) die erste und zweite Referenzhelligkeit abhängig von mindestens einer von der maximalen Helligkeit, der minimalen Helligkeit und der durchschnittlichen Helligkeit des Bildes einstellt.

**Revendications**

1. Dispositif de mesure de température de trou de coulée de haut fourneau, comprenant :

   une unité de mesure de température (110) configurée pour mesurer une valeur de température en mesurant une première et une seconde énergie de rayonnement de longueur d'onde d'un trou de coulée de haut fourneau (10), et en appliquant un rapport d'émissivité de référence à la première et à la seconde énergie de rayonnement de longueur d'onde ;
   une caméra (121) configurée pour obtenir une image du trou de coulée de haut fourneau (10) ;
   une unité de traitement d'image (122) configurée pour calculer un rapport de laitier et de fer fondu en identifiant le laitier et le fer fondu à partir de l'image ; et
   une unité de correction (130) configurée pour générer une valeur de température finale en appliquant une valeur de température corrigée, correspondant à une différence entre un rapport, calculé par l'unité de traitement d'image (122), et un rapport de référence, correspondant au rapport d'émissivité de référence, à une valeur de température, mesurée par l'unité de mesure de température (110),
   dans lequel, lorsqu'une quantité du laitier est supérieure à celle du fer fondu dans le trou de coulée de haut fourneau (10), l'unité de correction (130) génère la valeur de température corrigée de sorte que la valeur de température finale soit plus élevée.

2. Dispositif de mesure de température de trou de coulée de haut fourneau selon la revendication 1, dans lequel l'unité de traitement d'image (122) calcule un rapport entre un pixel ayant une luminosité, supérieure à une première et à une seconde luminosité de référence dans l'image, et un pixel ayant une luminosité, supérieure à la première luminosité de référence et inférieure à la seconde luminosité de référence dans l'image.

3. Dispositif de mesure de température de trou de coulée de haut fourneau selon la revendication 1, dans lequel l'unité de traitement d'image (122) identifie un ensemble de pixels, ayant une luminosité inférieure à une première luminosité de référence dans l'image, comme un fond, identifie un ensemble de pixels, ayant une luminosité supérieure à la première luminosité de référence et inférieure à une seconde luminosité de référence dans l'image, comme le fer fondu, et identifie un ensemble de pixels, ayant une luminosité supérieure aux première et seconde luminosités de référence dans l'image, comme le laitier.

4. Dispositif de mesure de température de trou de coulée de haut fourneau selon la revendication 1, dans lequel l'unité de traitement d'image (122) identifie un ensemble de pixels, ayant une luminosité inférieure à une première luminosité de référence dans l'image, en tant que fond, définit une ligne de référence 1 et une ligne de référence 3, correspondant à des positions de limites du fond, respectivement, dans l'image, définit une ligne de référence 2, entre la ligne de référence 1 et la ligne de référence 3 dans l'image, définit une région d'analyse incluant une portion de la ligne de référence 2 dans l'image, et calcule un rapport entre un pixel ayant une luminosité supérieure à la seconde luminosité de référence dans la région d'analyse et un pixel ayant une luminosité inférieure à la seconde luminosité de référence dans la région d'analyse.

5. Dispositif de mesure de température de trou de coulée de haut fourneau selon la revendication 4, comprenant en outre une unité de commande (123) configurée pour commander une plage de capture de la caméra (121) sur la base d'une position du fond dans l'image ou d'un rapport du fond dans l'image.

6. Dispositif de mesure de température de trou de coulée de haut fourneau selon la revendication 3, dans lequel l'unité de traitement d'image (122) définit les première et seconde luminosités de référence en fonction d'au moins une parmi une luminosité maximale, une luminosité minimale et une luminosité moyenne de l'image.

7. Dispositif de mesure de température de trou de coulée de haut fourneau selon la revendication 5, dans lequel l'unité de traitement d'image (122) définit les première et seconde luminosités de référence en fonction d'au moins une parmi une luminosité maximale, une luminosité minimale et une luminosité moyenne de l'image.

【FIG. 1】

【FIG. 2】

【FIG. 3】

Spectral Emissivities

【FIG. 4】

【FIG. 5】

【FIG. 6】

【FIG. 7】

【FIG. 8】

Reference Line 3

Reference Line 2

Reference Line 1

【FIG. 9】

【FIG. 10】

Slag Average Brightness 165
Molten Iron Average Brightness 130
Image Average Brightness 143
Slag Ratio (%) 35

**REFERENCES CITED IN THE DESCRIPTION**

**Patent documents cited in the description**

- JP 2007246959 A

- DE 112014003549 T5